(19) Europäisches Patentamt
European Patent Office
Office européen des brevets

(11) EP 0 811 651 A2

(12) **EUROPEAN PATENT APPLICATION**

(43) Date of publication:
**10.12.1997 Bulletin 1997/50**

(51) Int Cl.6: **C08G 77/48**, C08L 83/05

(21) Application number: **97303789.8**

(22) Date of filing: **03.06.1997**

(84) Designated Contracting States:
**AT BE CH DE DK ES FI FR GB GR IE IT LI LU MC NL PT SE**

(30) Priority: **03.06.1996 JP 162356/96**

(71) Applicant: **SHIN-ETSU CHEMICAL CO., LTD.**
**Chiyoda-ku Tokyo (JP)**

(72) Inventors:
- **Fukuda, Kenichi,**
**c/o Shin-Etsu Chemical Co. Ltd.**
**Matsuida-machi, Usui-gun, Gunma-ken (JP)**
- **Tarumi, Yasuo, c/o Shin-Etsu Chemical Co. Ltd.**
**Matsuida-machi, Usui-gun, Gunma-ken (JP)**
- **Sakamoto, Takafumi,**
**c/o Shin-Etsu Chemical Co.Ltd.**
**Matsuida-machi, Usui-gun, Gunma-ken (JP)**
- **Yamamoto, Yasushi,**
**c/o Shin-Etsu Chemical Co. Ltd.**
**Matsuida-machi, Usui-gun, Gunma-ken (JP)**
- **Arai, Masatoshi, c/o Shin-Etsu Chemical Co. Ltd.**
**Matsuida-machi, Usui-gun, Gunma-ken (JP)**

(74) Representative: **Stoner, Gerard Patrick et al**
**MEWBURN ELLIS**
**York House**
**23 Kingsway**
**London WC2B 6HP (GB)**

(54) **Curable compositions**

(57) A linear perfluoro compound having at least two alkenyl groups in a molecule and a perfluoro structure in a backbone is blended with an organic silicon compound having three hydrosilyl groups in a molecule and a platinum group catalyst. The composition cures into an elastomer having improved rubber strength and elongation as well as satisfactory solvent resistance, chemical resistance, heat resistance, and low moisture permeability.

EP 0 811 651 A2

## Description

BACKGROUND

This invention relates to a curable composition which cures into a fluorinated elastomer having improved rubber-like properties, especially high strength and high elongation.

Prior Art

Curable fluorinated elastomer compositions comprising a fluorinated polymer and a crosslinking agent have been used in a variety of applications.

Currently available fluorinated elastomer compositions cure into elastomer products which are still insufficient in tensile strength, tear strength and elongation. The range of application of these compositions is limited despite many characteristics attributable to fluorine containment. There is a need for a fluorinated elastomer composition which affords improved rubber-like properties including high strength and high elongation.

Therefore, an object of the present invention is to provide a curable composition which cures into a fluorinated elastomer having high strength and high elongation.

We have found that by blending a linear perfluoro compound having at least two alkenyl groups in a molecule and a perfluoro structure in a backbone, especially a perfluoro compound of the general formula (1), which will be described later, with a crosslinking agent in the form of an organic silicon compound having-three hydrosilyl groups in a molecule and a platinum group catalyst, there is obtained a curable composition which cures into a fluorinated elastomer having improved rubber strength and elongation as well as satisfactory solvent resistance, chemical resistance, heat resistance, low-temperature properties, and low moisture permeability.

According to the invention, there is provided a curable composition comprising

(A) a linear perfluoro compound having at least two alkenyl groups in a molecule and a perfluoro structure in a backbone,
(B) an organic silicon compound having three hydrosilyl groups in a molecule, and
(C) a catalytic amount of a platinum group compound.

DETAILED DESCRIPTION OF THE INVENTION

In the curable composition of the invention, a first component is (A) a linear perfluoro compound having at least two alkenyl groups in a molecule and a perfluoro structure in a backbone. The perfluoro compound is preferably of the following general formula (1).

$$CH_2=CH-(X)_b-[Rf-Q]_a-Rf-(X)_b-CH=CH_2 \qquad \ldots (1)$$

wherein X is independently $-CH_2-$, $-CH_2O-$, $-CH_2OCH_2-$ or $-Y-NR^1-CO-$ wherein Y is $-CH_2-$ or

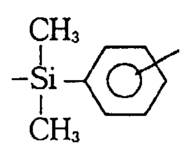

and $R^1$ is hydrogen or a substituted or unsubstituted monovalent hydrocarbon group,

Q is a group of the following general formula (2), (3) or (4):

$$-(X)_b-(C_2H_4)-R^2-(C_2H_4)-(X)_b- \qquad \ldots (2)$$

wherein X is as defined above and $R^2$ is a substituted or unsubstituted divalent hydrocarbon group which may have

at least one intervening atom selected from oxygen, nitrogen and silicon atoms,

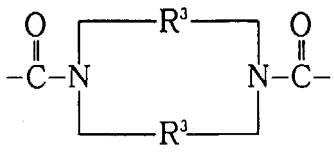

... (3)

wherein $R^3$ is independently selected from substituted or unsubstituted divalent hvdrocarbon groups.

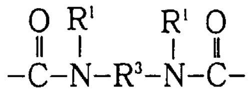

... (4)

wherein $R^1$ and $R^3$ are as defined above,

Rf is a divalent perfluoroalkylene or perfluoropolyether group,

letter a is an integer inclusive of 0, and b is independently 0 or 1.

More particularly, in formula (1), Rf is a divalent perfluoroalkylene group or divalent perfluoropolyether group. The divalent perfluoroalkylene group is preferably of the formula: $-C_mF_{2m}-$ wherein m is an integer of 1 to 10, preferably 2 to 6. The divalent perfluoropolyether group is preferably of the following formulae:

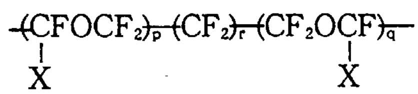

wherein X is F or a $CF_3$ group, and letters p, q and r are integers satisfying $p \geqq 1$, $q \geqq 1$, $2 \leqq p + q \leqq 200$, especially $2 \leqq p + q \leqq 110$, and $0 \leqq r \leqq 6$;

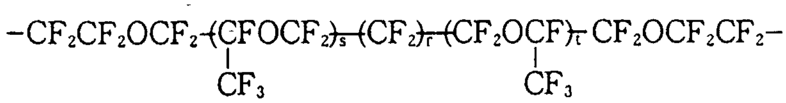

wherein letters r, s and t are integers satisfying $0 \leqq r \leqq 6$, $s \geqq 0$, $t \geqq 0$, $0 \leqq s + t \leqq 200$, especially $2 \leqq s + t \leqq 110$;

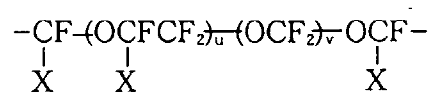

wherein X is F or a $CF_3$ group, and letters u and v are integers satisfying $1 \leqq u \leqq 100$ and $1 \leqq v \leqq 50$; and

$$-CF_2CF_2-(OCF_2CF_2CF_2)_w-OCF_2CF_2-$$

wherein letter w is an integer in the range: $1 \leqq w \leqq 100$.

Illustrative, non-limiting examples of Rf are given below.

$-C_4F_8-$ $-C_6F_{12}-$

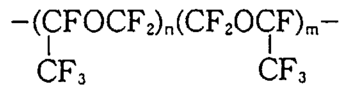

$\overline{n+m}$ = 2 to 200

$-CF_2CF_2OCF_2(CF_2)_2CF_2OCF_2CF_2-$

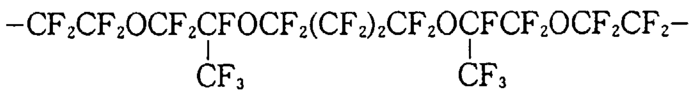

$-CF_2(OCF_2CF_2)_n(OCF_2)_mOCF_2-$ $\bar{n}$ = 5 to 50, $\bar{m}$ = 1 to 10

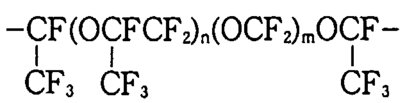

$\bar{n}$ = 5 to 50, $\bar{m}$ = 1 to 10

$-CF_2CF_2(OCF_2CF_2CF_2)_nOCF_2CF_2-$ $\bar{n}$ = 5 to 100

In formula (1), Q is a group of the following general formula (2), (3) or (4).

$$-(X)_b-(C_2H_4)-R^2-(C_2H_4)-(X)_b- \quad \cdots (2)$$

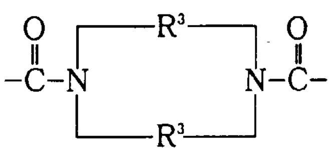

... (3)

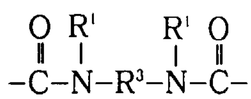

... (4)

In formulae (2) to (4), X is $-CH_2-$, $-CH_2O-$, $-CH_2OCH_2-$ or $-Y-NR^1-CO-$ wherein Y is $-CH_2-$ or

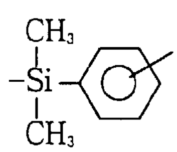

(o-, m- or p-position) and $R^1$ is hydrogen or a substituted-or unsubstituted monovalent hydrocarbon group, preferably, an alkyl or phenyl group, especially methyl and letter b is independently equal to 0 or 1.

$R^1$ is hydrogen or a substituted or unsubstituted monovalent hydrocarbon group, preferably of 1 to 12 carbon atoms. Examples of the monovalent hydrocarbon group include alkyl groups such as methyl, ethyl, propyl, isopropyl,

butyl, isobutyl, tert-butyl, pentyl, neopentyl, hexyl, heptyl, octyl, nonyl and decyl; cycloalkyl groups such as cyclopentyl, cyclohexyl and cycloheptyl; aryl groups such as phenyl, tolyl, xylyl and naphthyl; aralkyl groups such as benzyl, phenylethyl and phenylpropyl; and substituted ones of these groups wherein all or some of the hydrogen atoms are replaced by halogen atoms such as fluorine, chlorine and bromine or the like, such as chloromethyl, bromoethyl, chloropropyl, trifluoropropyl, and 3,3,4,4,5,5,6,6,6-nonafluorohexyl.

$R^2$ is a substituted or unsubstituted divalent hydrocarbon group which may have at least one intervening atom selected from oxygen, nitrogen and silicon atoms, preferably a divalent hydrocarbon group of the following general formula (5) or (6).

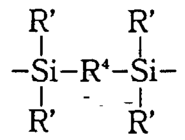

... (5)

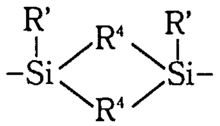

... (6)

R' is a substituted or unsubstituted monovalent hydrocarbon group and $R^4$ is independently a divalent hydrocarbon group which may have at least one atom selected from oxygen, nitrogen and silicon atoms in its backbone structure.

Preferably R' is a monovalent hydrocarbon group having 1 to 20 carbon atoms, especially 1 to 10 carbon atoms. Examples include alkyl groups such as methyl, ethyl, propyl, isopropyl, butyl, isobutyl, tert-butyl, pentyl, hexyl, octyl, and decyl; cycloalkyl groups such as cyclopentyl, cyclohexyl and cycloheptyl; alkenyl groups such as vinyl, allyl, propenyl, isopropenyl, butenyl and hexenyl; aryl groups such as phenyl, tolyl, xylyl and naphthyl; aralkyl groups such as benzyl, phenylethyl and phenylpropyl; and substituted ones of these groups wherein all or some of the hydrogen atoms are replaced by halogen atoms or the like, such as chloromethyl, chloropropyl, bromoethyl, 3,3,3-trifluoropropyl, and 6,6,6,5,5,4,4,3,3-nonafluorohexyl.

$R^4$ is a substituted or unsubstituted divalent hydrocarbon group, preferably having 1 to 20 carbon atoms, especially 1 to 10 carbon atoms. Examples include alkylene groups such as methylene, ethylene, propylene, methylethylene, butylene, and hexamethylene; cycloalkylene groups such as cyclohexylene; arylene groups such as phenylene, tolylene, xylylene, naphthylene, and biphenylene; substituted ones of these groups wherein some of the hydrogen atoms are replaced by halogen atoms or the like; and a mixture of such substituted or unsubstituted alkylene and/or arylene groups.

Alternatively, $R^4$ is a divalent hydrocarbon group which has at least one atom selected from oxygen, nitrogen and silicon atoms in its backbone structure. In this group, the oxygen atom can intervene in the form of -O-; the nitrogen atom can -intervene in the form of -NR"- wherein R" is hydrogen, an alkyl group of 1 to 8 carbon atoms, especially 1 to 6 carbon atoms or an aryl group; and the silicon atom can intervene as an organosiloxane-containing group or an organosilylene group. Exemplary groups are shown below.

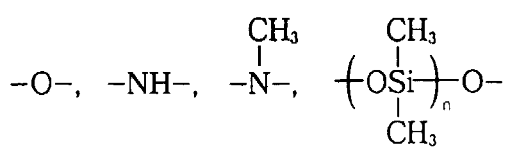

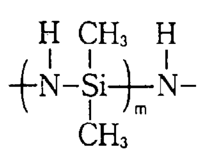

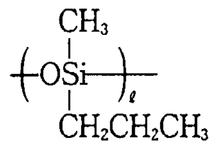

Herein, n is an integer of 1 to 5, m is an integer of 1 to 5, and 1 is an integer of 1 to 2.

$R^3$ in formulae (3) and (4) is preferably a substituted or unsubstituted divalent hydrocarbon group having 1 to 10 carbon atoms, especially 2 to 6 carbon atoms. Examples include alkylene groups such as methylene, ethylene, propylene, methylethylene, butylene, and hexamethylene; cycloalkylene groups such as cyclohexylene; arylene groups such as phenylene, tolylene, xylylene, naphthylene, and biphenylene; and substituted ones of these groups wherein some of the hydrogen atoms are replaced by halogen atoms or the like.

Illustrative examples of the group Q in formula (1) and represented by formula (2), (3) or (4) are given below. It is noted that Me is methyl and Ph is phenyl.

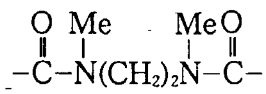 , 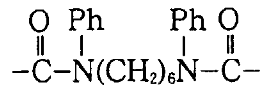 ,

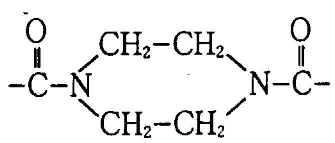 , 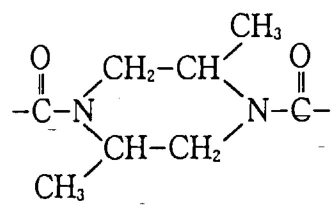 ,

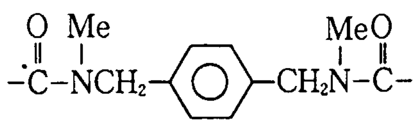 , 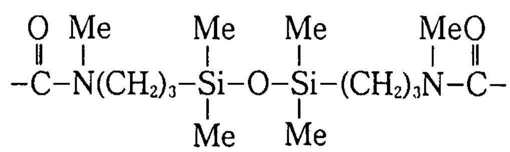 ,

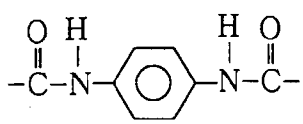 ,

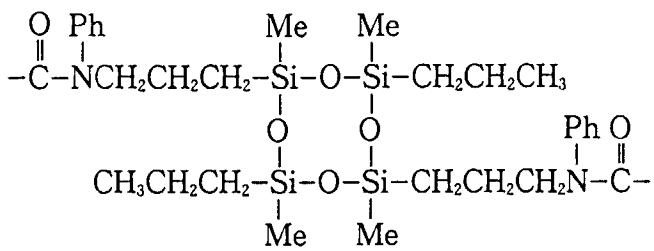 ,

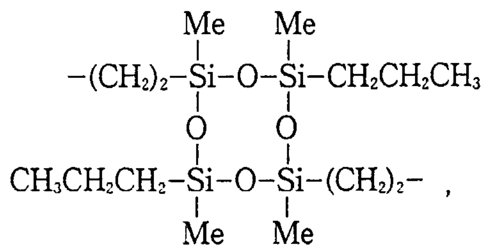
,

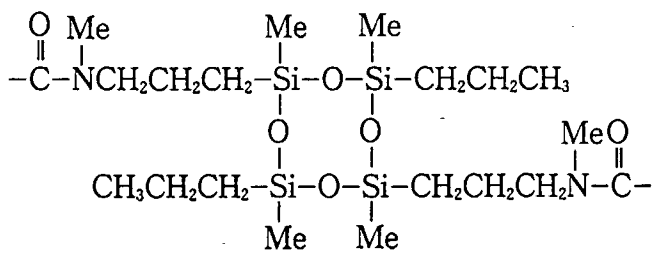
,

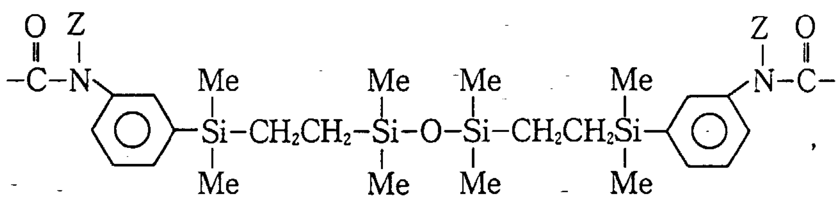
,

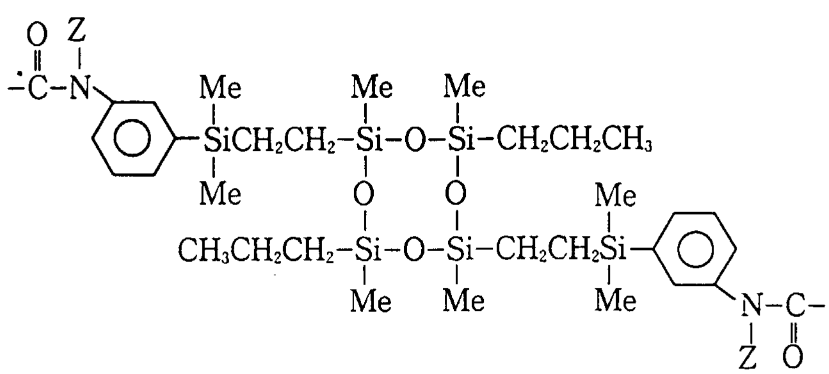
,

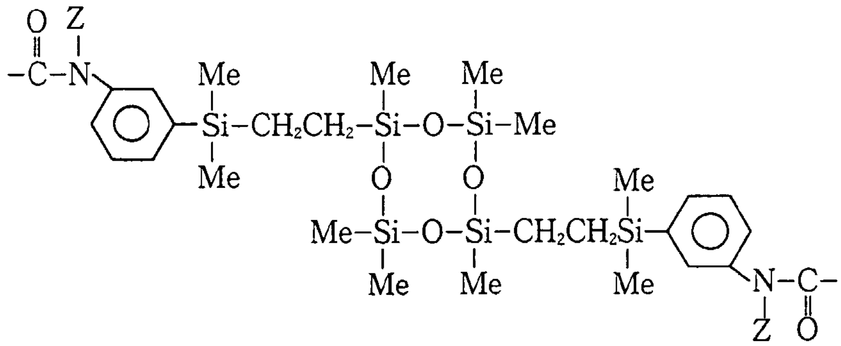

Note that Z is hydrogen, methyl or phenyl.

In formula (1), letter a is an integer inclusive of 0. Accordingly, the fluorinated compound of formula (1) contains at least one divalent perfluoroalkylene or perfluoropolyether group. Preferably, a is an integer of 0 to 10, especially 0 to 6.

The alkenyl group that formula (1) possesses is preferably one terminated with a $-CH=CH_2$ structure, for example, vinyl and allyl groups. The alkenyl group may be attached to each end of the backbone either directly or via a divalent linkage group represented by X.

In the practice of the invention, the fluorinated compound (A) may be selected from a wide spectrum ranging from low-viscosity polymers having a viscosity of several tens of centistokes at 25°C to solid raw rubber-like polymers. From the standpoint of ease of handling, raw rubber-like polymers are used for the heat-curable rubber while polymers having a viscosity of about 100 to 100,000 centistokes at 25°C are used for the liquid rubber. Polymers having a too low viscosity would cure into products which are low in elongation as the elastomer, failing to offer a balanced profile of physical properties.

A second component of the curable composition according to the invention is (B) an organic silicon compound which serves as a crosslinking agent for the fluorinated compound (A). There may be used any of organic silicon compounds having three hydrosilyl (SiH) groups in a molecule.

Preferred are organic silicon compounds having three hydrosilyl groups and at least one monovalent perfluorooxyalkyl or monovalent perfluoroalkyl group in a molecule. The monovalent perfluorooxyalkyl and perfluoroalkyl groups are preferably of the following general formulae.

Monovalent perfluoroalkyl group:

$$C_mF_{2m+1}-$$

m is an integer of 1 to 20, preferably 2 to 10.

Monovalent perfluorooxyalkyl group:

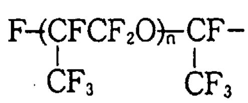

n is an integer of 1 to 5.

The organic silicon compounds may be of cyclic or linear structure or three-dimensional network. Preferably they may or may not have at least one monovalent organic group having a perfluoroalkyl or perfluoroalkyl ether group of the following general formula in a molecule as a monovalent substituent attached to a silicon atom.

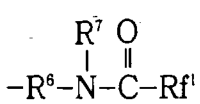 ,

$$-R^6-Rf^1$$

In the formulae, $R^6$ is a divalent hydrocarbon group of 1 to 10 carbon atoms, especially 2 to 6 carbon atoms, for example, alkylene groups such as methylene, ethylene, propylene, methylethylene, tetramethylene and hexamethylene, arylene groups such as phenylene, and

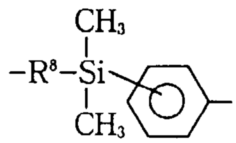

wherein $R^8$ is a divalent hydrocarbon group of 2 to 6 carbon atoms. $R^7$ is hydrogen or a monovalent hydrocarbon group having 1 to 8 carbon atoms, especially 1 to 6 carbon atoms. $Rf^1$ is a monovalent perfluoroalkyl or perfluorooxyalkyl group as represented by the foregoing general formulae.

The organic silicon compound (B) has a monovalent substituent group attached to a silicon atom other than the monovalent fluorinated substituent (i.e., monovalent organic group having a perfluoroalkyl or perfluorooxyalkyl group). Examples of the other substituent group include monovalent hydrocarbon groups preferably having 1 to 10 carbon atoms, more preferably 1 to 8 carbon atoms and preferably free of an aliphatic unsaturated bond.

In the organic silicon compound, three hydrosilyl (SiH) groups must be present per molecule. However, the combined use of a compound having a different number of SiH groups is included for a certain purpose.

Illustrative, non-limiting, examples of the organic silicon compound are given below. These compounds may be used alone or in admixture of two or more.

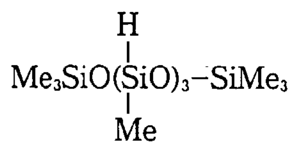
,

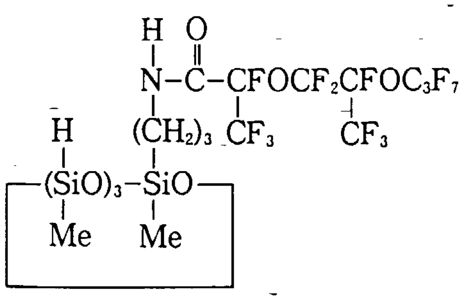
,

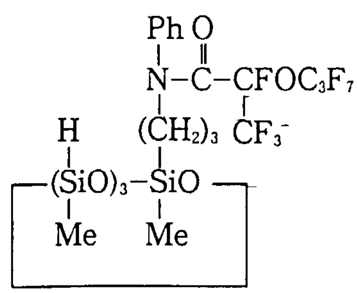
,

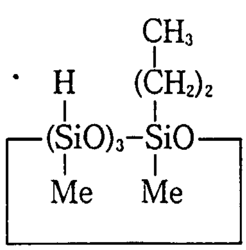
,

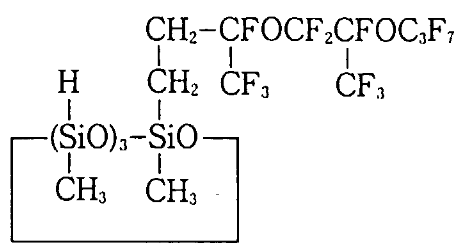
,

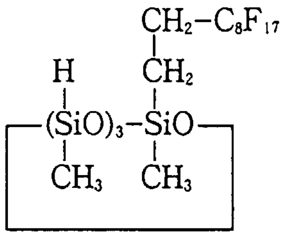 , 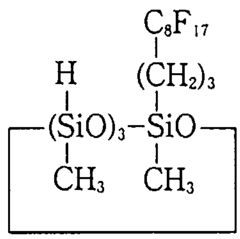 ,

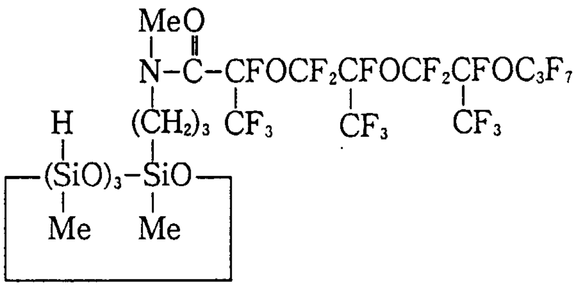 , 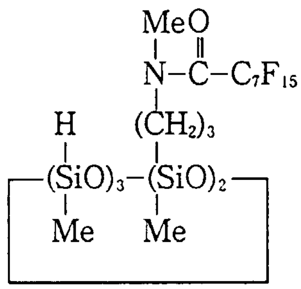 ,

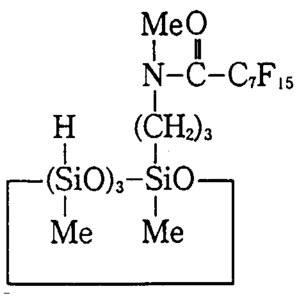 , 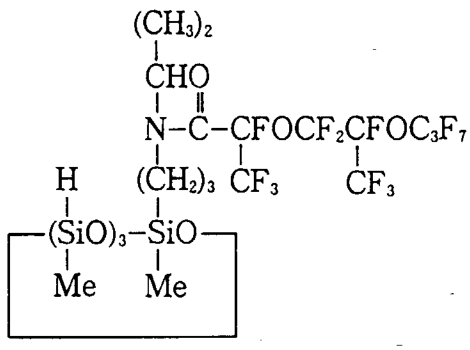 ,

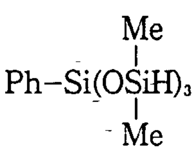 , 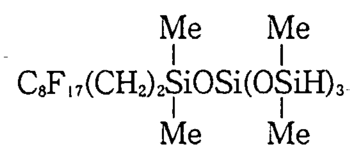 ,

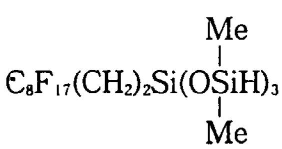 , 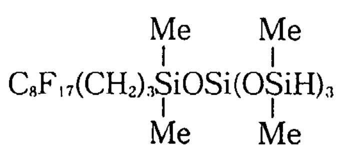 ,

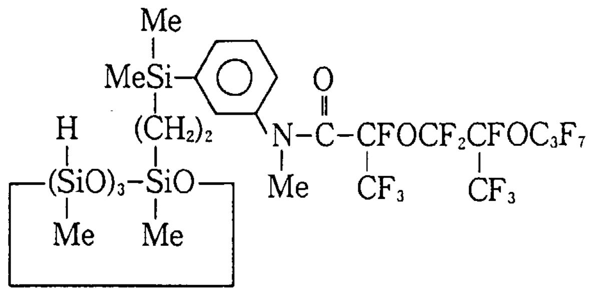,

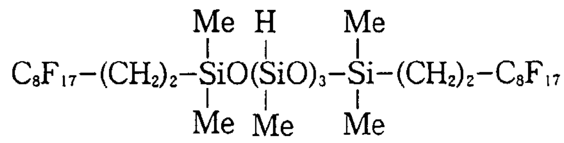

Component (B) is preferably blended in such amounts as to supply 0.5 to 5 mol, especially 1 to 2 mol of hydrosilyl (SiH) group in component (B) per mol of aliphatic unsaturated groups (such as vinyl, allyl, and cycloalkenyl groups) available in the entire composition. On this basis, less than 0.5 mol of SiH group would result in an insufficient degree of crosslink whereas with more than 5 mol of SiH group, chain lengthening would preferentially take place rather than curing, foaming occur, and heat resistance and compression set be exacerbated. Specifically stated, about 0.1 to 50 parts by weight of component (B) is generally blended per 100 parts by weight of component (A).

The curable composition further contains a platinum group compound as a third essential component (C). It is a catalyst for catalyzing addition reaction or hydrosilylation between the fluorinated compound and the organic silicon compound, that is, serves as a curing promoter. Since the platinum group compounds-are generally compounds of noble metals and expensive, relatively easily available platinum compounds are often used.

Illustrative, non-limiting examples of the platinum compound include chloroplatinic acid, complexes of chloroplatinic acid with olefins such as ethylene, complexes of chloroplatinic acid with alcohols or vinylsiloxanes, and platinum on silica, alumina and carbon. Platinum group compounds other than the platinum compounds are also useful. Known examples include compounds of rhodium, ruthenium, iridium, and palladium, for example, such as $RhCl(PPh_3)_3$, $RhCl(CO)(PPh_3)_2$, $[RhCl(C_2H_4)_2]_2$, $Ru_3(CO)_{12}$, $IrCl(CO)(PPh_3)_2$, and $Pd(PPh_3)_4$ wherein Ph is phenyl.

The amount of the catalyst used is not critical. A desired curing rate will be achieved with a catalytic amount. From an economical point of view or to produce satisfactory cured products, the catalyst is preferably added in an amount of about 0.1 to 1,000 ppm, more preferably about 0.1 to 500 ppm of platinum group element based on the weight of the entire curable composition.

Various additives may be added to the curable composition of the invention in order to enhance its practical usage. Useful additives include polysiloxanes containing a $CH_2{=}CH(R)SiO$ unit wherein R is hydrogen or a substituted or unsubstituted monovalent hydrocarbon group (see JP-B 10947/1973) and acetylene compounds (see USP 3,445,420 and JP-B 3774/1979), which are added for the purpose of controlling the curing rate of the curable composition, and ionic compounds of heavy metals (see USP 3,532,649).

Moreover, fillers may be blended in the curable composition of the invention for the purposes of reducing thermal shrinkage upon curing, reducing the coefficient of thermal expansion of elastomers as cured, improving thermal stability, weather resistance, chemical resistance, flame retardancy and mechanical strength, and reducing gas permeability. Exemplary fillers include fumed silica, quartz powder, glass fibers, carbon, metal oxides such as iron oxide, titanium oxide, and cerium oxide, and metal carbonates such as calcium carbonate and magnesium carbonate. If desired, suitable pigments, dyes or anti-oxidants may also be added.

Any desired method may be used in preparing the curable composition according to the invention. The composition can be prepared simply by kneading the above-defined components. Also useful is a two-part composition wherein one part is a mixture of the first and second components and the other part is a mixture of the first and third components. In this case, the two parts are blended on use. The curable composition as prepared can be cured at room temperature depending on the type of functional group in the fluorinated compound as the first essential component and the type of catalyst as the third essential component. Preferably the composition is cured by heating at 100 to 200°C for several minutes to several hours.

On use, the curable composition of the invention may be dissolved in suitable fluorinated solvents such as meta-xylene hexafluoride and fluorinates to a desired concentration depending on its application and purpose.

The curable composition of the invention may be used in a variety of applications. Cured products resulting from the curable composition exhibit improved rubbery physical properties including high strength and high elongation (or extension) as well as satisfactory solvent resistance, chemical resistance, heat resistance, and low moisture permeability. Then the cured products or elastomers are useful as high strength members such as O-rings.

EXAMPLE

Examples of the present invention are given below by way of illustration and not by way of limitation. Note that Me is methyl. All parts are by weight.

Comparative Example 1

To 100 parts of a polymer of the following formula (A) having a viscosity of 4,400 centistokes at 25°C, an average molecular weight of 16,500 and a vinyl content of 0.013 mol/100 grams was added 20 parts of fumed silica having a specific surface area of 300 $m^2/g$ and treated with a compound of the following formula (i). They were mixed, heat treated, and milled on a three-roll mill. To the compound were further added 0.3 part of a 50% toluene solution of ethynyl cyclohexanol, 0.2 part of a toluene solution of a chloroplatinic acid catalyst modified with a compound of the following formula (B) (platinum concentration 0.5% by weight), and 2.4 parts of a polyfunctional fluorinated hydrogen siloxane of the following formula (C). Mixing was continued to form a curable composition.

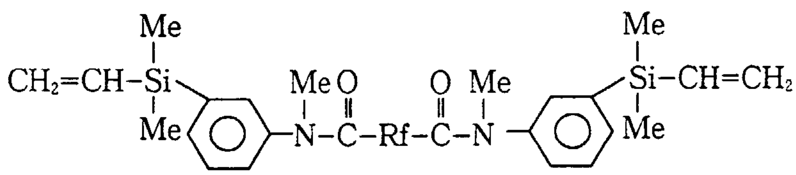

... (A)

Rf: 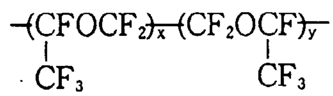

$\overline{x+y} = 97$

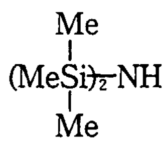

... (i)

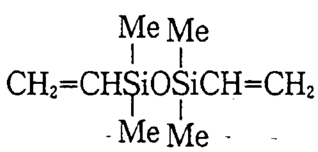

... (B)

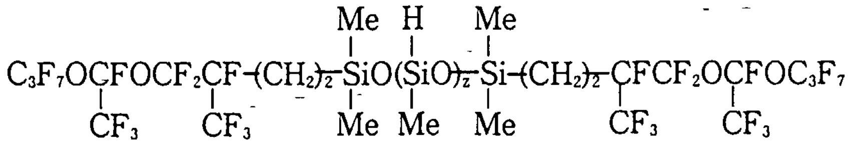

... (C)

$\bar{z} = 12$

The curable composition was cured by heating at 150°C for one hour. The cured product was examined for physical properties, finding a hardness of 55 on JIS A scale, a tensile strength of 42 $kgf/cm^2$, an elongation of 250%, and a tear strength of 7 kgf/cm.

Example 1

A composition was prepared as in Comparative Example 1 except that 3.3 parts of a fluorinated hydrogen siloxane of the following formula (D) was added instead of the fluorinated hydrogen siloxane of formula (C). The composition was cured under the same conditions into a cured product. It was examined for physical properties, finding a hardness of 50 on JIS A scale, a tensile strength of 93 $kgf/cm^2$, an elongation of 460%, and a tear strength of 31 kgf/cm.

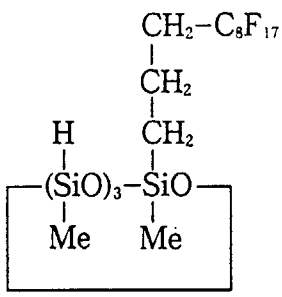

... (D)

Example 2

A composition was prepared as in Comparative Example 1 except that 20 parts of fumed silica having a specific surface area of 300 $m^2/g$ and treated with dimethyldichloro- silane was added instead of the fumed silica of Comparative Example 1 and 3.1 parts of a fluorinated hydrogen siloxane of the following formula (E) was added instead of the fluorinated hydrogensiloxane of formula (C). The composition was cured under the same conditions into a cured product. It was examined for physical properties, finding a hardness of 43 on JIS A scale, a tensile strength of 97 $kgf/cm^2$, an elongation of 750%, and a tear strength of 41 kgf/cm.

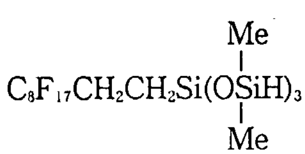

... (E)

Comparative Example 2

To 100 parts of a polymer of the following formula (F) having a vinyl content of 0.008 mol/100 grams was added 10 parts of fumed silica having a specific surface area of 300 $m^2/g$ and treated with the compound of formula (i). They were mixed, heat treated, and milled on a three-roll mill. To the compound were further added 0.3 part of a 50% toluene solution of ethynyl cyclohexanol, 0.2 part of the platinum catalyst used in Comparative Example 1, and 1.6 parts of a

polyfunctional fluorinated siloxane of the following formula (G). Mixing was continued to form a curable composition.

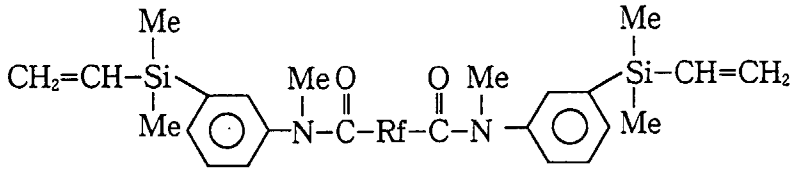

... (F)

Rf: 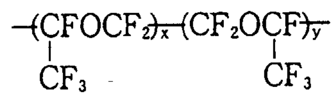 $\overline{x+y} = 150$

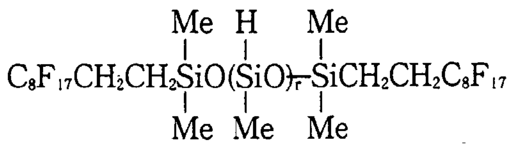

$\overline{r} = 10$ ... (G)

The curable composition was cured by heating at 150°C for one hour. The cured product was examined for physical properties, finding a hardness of 26 on JIS A scale, a tensile strength of 38 kgf/cm$^2$, an elongation of 510%, and a tear strength of 7 kgf/cm.

Example 3

A composition was prepared as in Comparative Example 2 except that 2.3 parts of a compound of the following formula (H) was added instead of the polyfunctional fluorinated hydrogen siloxane of formula (G). The composition was cured under the same conditions into a cured product. It was examined for physical properties, finding a hardness of 20 on JIS A scale, a tensile strength of 83 kgf/cm$^2$, an elongation of 1300%, and a tear strength of 25 kgf/cm.

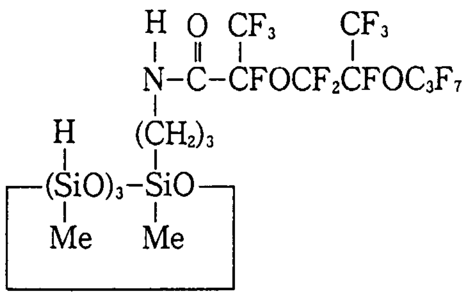

... (H)

Comparative Example 3

A composition was prepared as in Comparative Example 2 except that 100 parts of a polymer of the following formula (I) having a vinyl content of 0.013 mol/100 grams was used instead of the polymer of formula (F) and 2.7 parts of the crosslinking agent of formula (G) was added. The composition was cured under the same conditions into a cured product. It was examined for physical properties, finding a hardness of 45 on JIS A scale, a tensile strength of 22 kgf/cm$^2$, an elongation of 180%, and a tear strength of 5 kgf/cm.

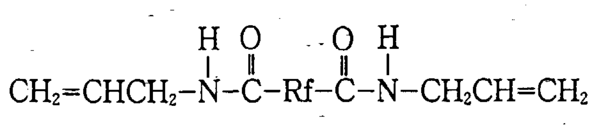

... (I)

Rf: 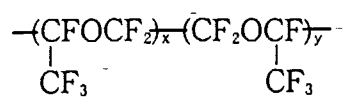 $\overline{x+y} = 90$

Example 4

A composition was prepared as in Comparative Example 3 except that 4.0 parts of a compound of the following formula (J) was added instead of the crosslinking agent of formula (G). The composition was cured under the same conditions into a cured product. It was examined for physical properties, finding a hardness of 40 on JIS A scale, a tensile strength of 74 kgf/cm$^2$,an elongation of 400%, and a tear strength of 20 kgf/cm.

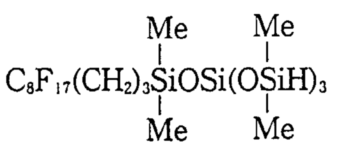

... (J)

Reference Example

A 200-ml flask equipped with a stirrer was charged with 45.6 grams (0.2 mol) of a compound of the following formula (K) and heated at 110°C. To the flask was added 0.4 gram of an ethynyl hexanol-modified platinum catalyst having a platinum concentration of 2%. Further, 46.0 grams (0.1 mol) of $C_8F_{17}CH_2CH=CH_2$ was added dropwise for reaction to take place. Vacuum distillation of the reaction solution yielded 40.7 grams of the compound of formula (J). The isolation yield was 52%.

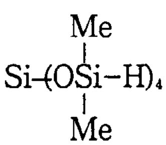

... (K)

It is understood that an organohydrogensiloxane terminated-with -$OSi(OSiMe_2H)_3$ as used above can beproduced by using Rf'-R' and an excess amount of $(HMe_2SiO)_3$-Si-R" wherein Rf' is a perfluoroalkyl or perfluorooxyalkyl group, R' is an alkenyl group, and R" is a monovalent hydrocarbon group and effecting partial addition reaction between them in the presence of a platinum catalyst. The excess amount is at least 1.2 mol, especially 1.5 to 5 mol of $(HMe_2SiO)_3$-Si-R" per mol of Rf'-R'.

Japanese Patent Application No. 162356/1996 is incorporated herein by reference.

Although some preferred embodiments have been described, many modifications and variations may be made thereto in the light of the above teachings. It is therefore to be understood that within the scope of the appended claims, the invention may be practiced otherwise than as specifically described.

**Claims**

**1.** A curable composition comprising

(A) a linear perfluoro compound having at least two alkenyl groups in a molecule and a perfluoro structure in a backbone,

(B) an organic silicon compound having three hydrosilyl groups in a molecule, and
(C) a catalytic amount of a platinum group compound.

**2.** The curable composition of claim 1 wherein said linear perfluoro compound (A) is of the following general formula (1):

$$CH_2{=}CH{-}(X)_b{-}[Rf{-}Q]_a{-}Rf{-}(X)_b{-}CH{=}CH_2 \quad \cdots (1)$$

wherein X is independently selected from the group consisting of $-CH_2-$, $-CH_2O-$, $-CH_2OCH_2-$, and $-Y-NR^1-CO-$ wherein Y is $-CH_2-$ or

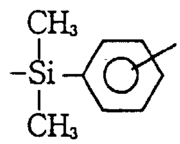

and $R^1$ is hydrogen or a substituted or unsubstituted monovalent hydrocarbon group,
Q is a group of the following general formula (2), (3) or (4):

$$-(X)_b-(C_2H_4)-R^2-(C_2H_4)-(X)_b- \quad \cdots (2)$$

wherein X is as defined above and $R^2$ is a substituted or unsubstituted divalent hydrocarbon group which may have at least one intervening atom selected from oxygen, nitrogen and silicon atoms,

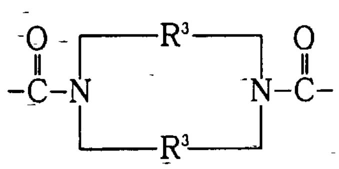

... (3)

wherein $R^3$ is independently selected from substituted or unsubstituted divalent hydrocarbon groups,

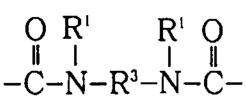

... (4)

wherein $R^1$ and $R^3$ are as defined above,
Rf is a divalent perfluoroalkylene or perfluoropolyether group,
letter a is an integer inclusive of 0, and b is independently 0 or 1.

**3.** The curable composition of claim 1 wherein said organic silicon compound (B) is an organic silicon compound having three hydrosilyl groups and at least one monovalent perfluorooxyalkyl or perfluoroalkyl group in a molecule.